# FASCICULE DE BREVET EUROPEEN

(11) **EP 3 194 272 B1**
(45) Date de publication et mention de la délivrance du brevet: **31.10.2018**
(21) Numéro de dépôt: 15787650.9
(22) Date de dépôt: 16.09.2015
(51) Int. Cl.: B64D 27/10, B64D 27/26

(54) **PROCEDE ET DISPOSITIF DE MONTAGE D'UN MOTEUR SUR UN PYLONE D'AERONEF**
VERFAHREN UND VORRICHTUNG ZUR MONTAGE EINES MOTORS AN EINEM FLUGZEUGPYLON
METHOD AND DEVICE FOR MOUNTING AN ENGINE ON AN AIRCRAFT PYLON

(30) Priorité: 16.09.2014 FR 1458756
(43) Date de publication de la demande: 26.07.2017
(73) Titulaire: SAFRAN AIRCRAFT ENGINES, 75015 Paris (FR)
(72) Inventeur: LAMBEY, Mario, F-77550 Moissy-Cramayel (FR); BEUTIN, Bruno, Albert, F-77550 Moissy-Cramayel Cedex (FR); TESNIERE, Marc, Patrick, F-77550 Moissy-Cramayel Cedex (FR)
(74) Mandataire: Gevers & Orès
(86) Numéro de dépôt international: PCT/FR2015/052478
(87) Numéro de publication internationale: WO 2016/042264

(56) Documents cités:
- EP-A1- 0 844 174
- FR-A1- 2 920 409
- FR-A1- 2 974 065
- US-A- 5 524 847

## Description

### Domaine de l'invention

La présente invention concerne le domaine des turbomoteurs, tels que les turboréacteurs ou turbopropulseurs et vise leur montage sur un avion. Elle s'applique plus particulièrement au montage d'un moteur sur un pylône solidaire de l'avion.

### Etat de la technique

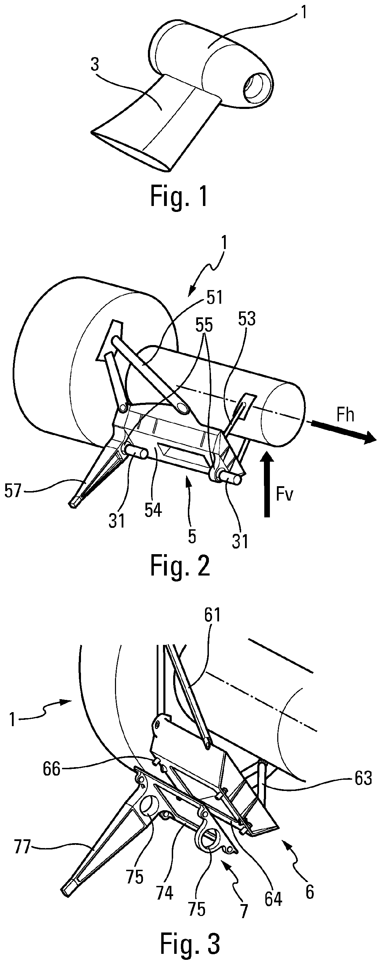

Dans le cadre d'un développement portant sur une disposition des moteurs de propulsion, il a été proposé de relier les moteurs au fuselage, notamment à l'arrière, par l'intermédiaire de pylônes. La suspension des moteurs comprend avantageusement un berceau formant interface avec le pylône et une structure de liaison du berceau au moteur. Il est à noter que la liaison du berceau au pylône comprend une paire d'axes horizontaux solidaires du pylône qui sont enchâssés dans des oreilles solidaires du berceau comme on le voit sur la figure 1. Ce type d'agencement permet une installation des équipements plus aisée ainsi qu'une reprise d'efforts équilibrée. Par ailleurs il permet d'installer le moteur sur un pylône pouvant présenter une inclinaison, en particulier vers le haut, par rapport à l'horizontale.

Dans ce cas cependant, il se pose un problème lors de l'installation du moteur sur l'avion ; opération que l'on désigne aussi avionnage. Le montage du moteur sur l'avion est déjà en soi une opération délicate car la suspension et le pylône doivent être liés l'un à l'autre avec une grande précision. La précision de la position d'un moteur par rapport à l'avion est essentielle, tant d'un point de vue mécanique que d'un point de vue aérodynamique et des performances de l'avion. On observe que l'interface entre le moteur et le pylône, l'orientation du

Dans cette configuration, l'opération de hissage du moteur impose également d'allier deux déplacements : tout d'abord une translation verticale du moteur pour l'amener exactement à la bonne hauteur puis une translation horizontale de l'arrière vers l'avant pour permettre aux organes de suspension du moteur solidaires du pylône, c'est à dire appartenant au pylône, de s'interfacer correctement avec les suspensions. Toutefois le système de levage étant constitué d'un pont levant et d'élingues, cette opération présente le risque d'un endommagement des organes de suspension sur le pylône, ce qui entraînerait une immobilisation supplémentaire de l'avion. Les organes de suspension solidaires du pylône peuvent comprendre des axes horizontaux et d'éventuels plots souples d'amortissement des vibrations.

Les techniques de montage de moteur avec hissage par des élingues et déplacements par translations verticales et horizontales sont en soi connues. Un exemple de mode opératoire est décrit dans la demande de brevet WO2012172208 déposée au nom de la présente demanderesse. La solution proposée dans ce document ne permet pas de résoudre le problème de protection de certains organes de l'avion.

Le document FR 2 920 409 A1 décrit un procédé de montage d'un moteur sur un pylône d'aéronef.

### Exposé de l'invention

Le présent déposant s'est fixé comme objectif de pallier ce problème et de réduire les risques d'endommagement liés à l'avionnage des moteurs.

On parvient à cet objectif en mettant en oeuvre le procédé conformément à l'invention.

C'est ainsi que le procédé de montage d'un moteur sur un pylône d'aéronef comprenant des organes de suspension du moteur solidaires du pylône, le moteur étant solidaire d'un berceau de suspension par lequel il est suspendu au pylône, le procédé comprenant une étape de hissage du moteur selon une direction verticale jusqu'au pylône puis une étape d'accostage du pylône par un déplacement du moteur selon une autre direction, est caractérisé par le fait que l'on fixe préalablement au pylône, en l'accrochant aux dits organes de suspension, une pièce intermédiaire présentant une interface destinée à coopérer avec une interface complémentaire prévue sur le berceau de façon à caler en position le berceau par rapport à la pièce intermédiaire à l'issue de l'accostage du pylône.

Les deux interfaces sont de préférence agencées de telle façon que l'accostage puisse être réalisé par translation perpendiculairement à l'axe du moteur et la translation de l'accostage est de préférence effectuée dans un plan horizontal. De façon à garantir un accostage sans heurt, le berceau est guidé et calé en position par rapport à la pièce intermédiaire au moyen de pions de centrage prévus sur l'une des deux interfaces, les pions coopérant avec des orifices de centrage ménagés sur l'autre interface. Le procédé de fixation comprend une étape de fixation du berceau à la pièce intermédiaire, une fois le berceau calé en position par rapport à la pièce intermédiaire.

L'invention porte également sur le dispositif pour la mise en oeuvre du procédé. Il comprend un berceau et une pièce intermédiaire, le berceau étant agencé pour être fixé au moteur par une structure de liaison et la pièce intermédiaire étant agencée pour être fixée au pylône indépendamment du berceau. Ce dispositif comprend de préférence également un moyen de fixation du berceau à la pièce intermédiaire. Ce dernier moyen de fixation comprend notamment des boulons liant le berceau à la pièce intermédiaire.

De manière à faciliter l'accostage le dispositif comprend un moyen de calage en position du berceau sur la pièce intermédiaire. Conformément à une autre caractéristique la pièce intermédiaire du dispositif comprend des moyens, tels que des oreilles agencés pour coopérer avec les organes de suspension, tels que des axes, solidaires du pylône.

L'invention porte également sur l'ensemble d'un aéronef et d'au moins un moteur, le moteur étant fixé à un pylône incliné vers le haut par l'intermédiaire du dispositif ci-dessus.

### Présentation des figures

L'invention sera mieux comprise, et d'autres buts, détails, caractéristiques et avantages de celle-ci apparaîtront plus clairement à la lecture de la description explicative détaillée qui va suivre, d'un mode de réalisation de l'invention donné à titre d'exemple purement illustratif et non limitatif, en référence aux dessins schématiques annexés.
Sur ces dessins :
- La figure 1 est une représentation d'un ensemble formé par un moteur et un pylône de liaison au fuselage d'un avion ;
- La figure 2 montre une structure de fixation d'un moteur à un pylône, présentant des inconvénients que l'invention vise à résoudre;
- La figure 3 montre en perspective éclatée un agencement pour la mise en oeuvre du procédé selon l'invention ;
- La figure 4 montre le moteur avec le berceau de l'agencement seul ;
- La figure 5 montre une phase de montage selon l'invention du moteur sur le pylône.

### Description détaillée d'un mode de réalisation de l'invention

La figure 1 représente un moteur 1, par exemple de type « open rotor » avec sa nacelle tournante, représentée ici sans les hélices. Le moteur est monté sur un pylône 3 qui est apte à être fixé au fuselage d'un avion, non visible ici, en formant un angle non nul avec un plan horizontal. Sur la figure 2, on voit un exemple de berceau 5 de suspension développé par la demanderesse et permettant d'assurer la fixation du moteur 1 au pylône 3. Le moteur, ici de type « open rotor », est représenté de façon schématique par une partie cylindrique avant figurant le générateur de gaz et une partie cylindrique arrière de plus grand diamètre figurant la turbine de puissance. Les hélices non carénées, typiquement deux hélices contrarotatives, ne sont pas représentées. Le berceau 5 est prolongé du côté moteur par une structure de liaison avec des bras 51, 53 reliant un plateau 54, ou équivalent, du berceau à divers points d'accrochage sur le moteur situés sur des éléments de carter structuraux, tels que la carcasse du générateur de gaz à l'avant et le carter arrière qui porte les hélices. Sur le côté opposé du plateau sont situés les moyens de fixation au pylône. Il s'agit ici également, d'oreilles 55 radiales disposées en alignement coaxial et dans lesquelles sont glissés des axes 31 coaxiaux constituant des organes de suspension solidaires du pylône, lequel n'est pas autrement représenté sur la figure 2. Les axes 31 font partie du pylône et constituent des moyens d'accrochage du moteur au pylône.

Des moyens non représentés assurent la reprise des efforts axiaux entre le moteur et le pylône. Par ailleurs, un bras 57 du plateau, perpendiculaire à ce dernier et dans lequel une des oreilles 55 est formée, agit comme un bras de levier ayant comme axe pivot l'axe commun des oreilles 55. Il permet de reprendre les efforts verticaux transmis par le moteur au pylône, notamment le poids du moteur. Ce bras 57 du plateau est monté sur le pylône de façon à empêcher toute rotation du plateau autour des axes 31. Le pylône peut comprendre un caisson structurant sur lequel sont fixés les axes 31 et une interface adaptée pour recevoir le bras du plateau. Le carénage du pylône 3 visible sur la figure 1 est mis en place sur le caisson après le raccordement du berceau 5 au caisson.

Selon un mode de montage initialement envisagé puis abandonné par la demanderesse, le berceau est d'abord fixé au moteur par l'intermédiaire de la structure de liaison, puis l'ensemble est mis en place sur le pylône. Pour cela, on présente le moteur par exemple sur un charriot de transport que l'on dispose sensiblement sous l'extrémité distale du pylône, puis on accroche le moteur à un élévateur, tel qu'un pont levant, et on le hisse verticalement pour l'amener sensiblement à la même hauteur que les axes 31, voir la flèche Fv. L'élévateur comprend par exemple un palonnier ayant la forme d'une poutre horizontale dont une extrémité est reliée par des élingues au carter de la turbine de puissance et l'extrémité opposée est reliée par des élingues au carter du générateur de gaz. De cette façon, le moteur peut être déplacé tout en gardant son axe horizontal.

Néanmoins, en raison du fait que le pylône 3 forme un angle non nul avec un plan horizontal, le simple hissage du moteur, c'est à dire uniquement une translation de bas en haut, n'est pas suffisant. En effet, le déplacement du berceau 5 est gêné par le pylône et en particulier par les organes de suspension comprenant les axes 31 du pylône. Le hissage du moteur doit donc amener le berceau 5 dans une position écartée des axes 31 et être suivi d'une translation en direction du pylône pour rapprocher le moteur du pylône. En particulier ici, les positions relatives du moteur et du pylône doivent autoriser un simple déplacement horizontal selon l'axe xx du moteur, voir la flèche Fh. Dans ce but les axes 31 doivent être placés de manière à être coaxiaux avec les axes des oreilles 55. Lors de cette translation qui constitue une étape d'accostage du pylône, il faut éviter que le berceau 5 ne vienne heurter les axes 31 qui risqueraient d'être endommagés, compte tenu de la masse de l'ensemble déplacé, nécessitant une intervention sur le pylône. La réparation du pylône entraînerait des coûts supplémentaires importants.

Il apparaît que ce mode de montage, envisagé initialement, n'est pas satisfaisant: le risque d'endommager les axes 31 du pylône lors des déplacements est important ; en outre le hissage est suivi de plusieurs déplacements dans des directions différentes, ce qui complique la mise en oeuvre du montage et nécessite un dispositif pour déplacer horizontalement l'élévateur selon au moins deux directions.

La demanderesse a donc recherché une solution pour pallier ces inconvénients. Celle-ci est représentée sur les figures 3, 4 et 5.

Le dispositif de l'invention comprend un berceau 6 et une pièce intermédiaire 7. Le berceau 6 comprend lui-même un plateau 64 ou équivalent, se prolongeant du côté moteur par une structure de liaison 61, 63.

Cette structure de liaison est formée, par exemple, des attaches arrière 61 au carter arrière qui porte les hélices dans le cas d'un « open rotor » et des attaches avant 63 à la carcasse du générateur de gaz. La réalisation de la structure de liaison ne fait pas partie de l'invention et ne sera pas détaillée. Toute structure assurant au moins la fonction d'attache du berceau au moteur convient.

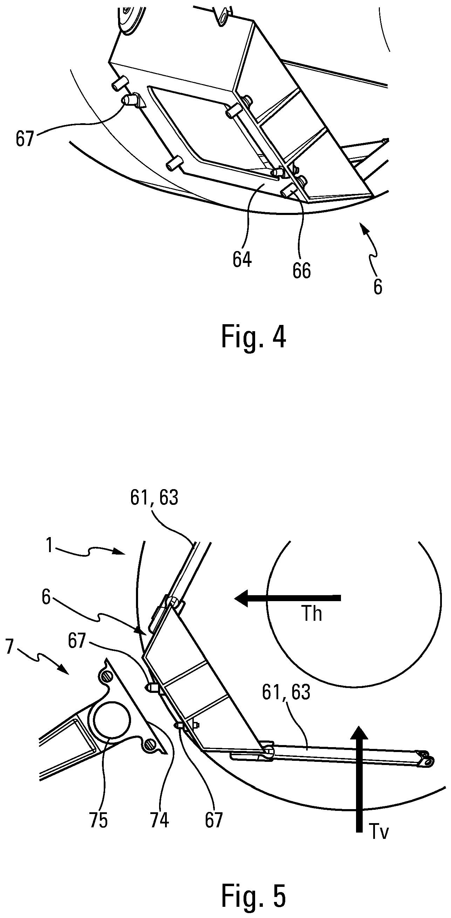

Le berceau 6 comprend, également, du côté opposé à la structure de liaison, un moyen assurant la fixation au pylône par l'intermédiaire de la pièce intermédiaire 7. Le plateau 64 du berceau est interfacé de manière à pouvoir être rapporté sur la pièce intermédiaire 7 et fixé à celle-ci par tout moyen amovible approprié tel que par vissage ou boulonnage. La figure 4 montre des vis 66 en position pour être vissées dans des orifices correspondant ménagés dans le plateau de la pièce intermédiaire 7.

La pièce intermédiaire 7 comprend un plateau ou équivalent 74 interfacé du côté du berceau de manière à pouvoir être rapporté et fixé sur le berceau 6. Par exemple, le plateau 74 peut présenter des surfaces planes constituant des surfaces d'appui pour des surfaces planes correspondantes du plateau 64 du berceau. La pièce intermédiaire 7 est interfacée du côté du pylône de manière à pouvoir être montée sur les organes de suspension du moteur, solidaires du pylône, et en particulier sur les axes 31 de ces organes de suspension. Cette dernière interface comprend deux oreilles 75 agencées pour recevoir les axes 31. Eventuellement cette liaison comprend des plots souples, pouvant être par exemple des blocs en matériau élastomère ou en métal tressé, permettant d'atténuer les vibrations du moteur transmises à la cabine de l'avion. Un plot souple peut être intégré entre un axe 31 du pylône et une oreille 75 de la pièce intermédiaire 7. La pièce intermédiaire est selon ce mode de réalisation pourvue d'un bras 77 dont la fonction est de reprendre les efforts verticaux transmis par le moteur au pylône. Ce bras 77 est fixé sur le pylône de manière à empêcher toute rotation de la pièce intermédiaire 7 autour des axes 31 solidaires du pylône.

Des pions de centrage 67 sont ici prévus sur le plateau 64 du berceau, et sont aptes à coopérer avec des orifices de centrage correspondants (non représentés) prévus sur le plateau 74 de la pièce intermédiaire 7 de manière à faciliter le montage et la mise en place du moteur sur le pylône. En alternative, les pions de centrage pourraient être prévus sur le plateau de la pièce intermédiaire, et les orifices de centrage correspondants prévus sur le plateau du berceau.

Les opérations de montage sont les suivantes.

On fixe d'abord le berceau 6 sur le moteur alors que celui-ci est encore au sol. On fixe la pièce intermédiaire 7 sur le pylône 3 en introduisant les axes 31 de ce dernier dans les oreilles 75 de la pièce intermédiaire et le bras 77 dans son logement sur le pylône. La position de la pièce intermédiaire 7 autour des axes 31 est ainsi déterminée : aucune rotation n'est possible.

On dispose ensuite le moteur équipé du berceau 6, sensiblement au droit de l'extrémité distale libre du pylône. Le moteur est orienté autour de son axe de manière à ce que l'interface libre de son plateau 64 soit parallèle à l'interface libre du plateau 74 de la pièce intermédiaire. Comme on le voit sur la figure 5, le moteur est hissé par translation verticale, voir la flèche Tv, jusqu'au niveau de la pièce intermédiaire 7 déjà en place sur le pylône. On déplace ensuite le moteur perpendiculairement à son axe par translation horizontale, voir la flèche Th, en direction de la pièce intermédiaire 7. Les pions de centrage 67 s'étendent préférablement de façon parallèle à la direction horizontale de translation, pour se trouver chacun sensiblement aligné avec l'axe d'un orifice de centrage correspondant prévu sur le plateau 74 de la pièce intermédiaire 7. Les pions et les orifices de centrage assurent ainsi le positionnement correct du berceau par rapport à la pièce intermédiaire lors de la translation horizontale. Une fois les deux plateaux 64 et 74 en contact l'un contre l'autre et positionnés en butée l'un par rapport à l'autre grâce à la complémentarité des interfaces du berceau et de la pièce intermédiaire, on peut lier les deux plateaux l'un à l'autre au moyen des vis 66.

En d'autres termes, la pièce intermédiaire 7 présente une interface apte à coopérer avec une interface complémentaire prévue sur le berceau 6 de façon à assurer le calage en position du berceau par rapport à la pièce intermédiaire à l'issue de l'étape d'accostage du pylône. Grâce à cette immobilisation, les plateaux respectifs 64 et 74 du berceau et de la pièce intermédiaire peuvent être liés l'un à l'autre sans risque de déplacement relatif de l'un par rapport à l'autre lors de l'opération de liaison, en particulier sans risque de glissement intempestif d'un plateau sur l'autre pendant que les vis de fixation sont mises en place. Il suffit lors de l'opération de liaison de maintenir l'appareil de levage dans la position de fin d'accostage. Un éventuel petit déplacement accidentel de l'appareil de levage par rapport au pylône n'entraînera pas de déplacement du berceau 6 sur la pièce intermédiaire 7, grâce à la coopération des deux interfaces.

Dans le mode de réalisation décrit dans la présente demande, l'interface de la pièce intermédiaire 7 comprend le plateau 74 et les orifices (non représentés) correspondant aux pions de centrage 67. L'interface complémentaire du berceau 6 comprend le plateau 64 et les pions de centrage 67. Il est entendu que les deux interfaces peuvent être réalisées par d'autres dispositions ne comprenant pas de plateaux et/ou de pions de centrage, dès lors que ces dispositions permettent de positionner le berceau par rapport à la pièce intermédiaire à l'issue de l'étape d'accostage du pylône. Par exemple, une surface présentant une partie en saillie pourrait être prévue à la place du plateau de la pièce intermédiaire 7, et une surface présentant une partie en creux dans laquelle la partie en saillie vient s'emboiter pourrait être prévue à la place du plateau du berceau.

La solution de l'invention permet ainsi un montage des moteurs simple à mettre en oeuvre, réduisant à un minimum le risque d'endommager les organes de suspension du moteur solidaires du pylône, grâce notamment à la pièce intermédiaire dont la fixation sur le pylône ne pose pas de problème particulier et peut être effectuée avec une sécurité optimale pour le pylône.

## Revendications

1. Procédé de montage d'un moteur (1) sur un pylône (3) d'aéronef comprenant des organes (31) de suspension du moteur solidaires du pylône, le moteur étant solidaire d'un berceau (6) de suspension par lequel il est suspendu au pylône, le procédé comprenant une étape de hissage du moteur selon une direction verticale jusqu'au pylône puis une étape d'accostage du pylône par un déplacement du moteur selon une autre direction, **caractérisé par le fait que** l'on fixe préalablement au pylône, en l'accrochant aux dits organes (31) de suspension, une pièce intermédiaire (7) présentant une interface destinée à coopérer avec une interface complémentaire prévue sur le berceau (6), de façon à caler en position le berceau par rapport à la pièce intermédiaire à l'issue de l'accostage du pylône.

2. Procédé selon la revendication précédente, dans lequel le moteur s'étend selon un axe et les deux interfaces sont agencées de telle façon que l'accostage puisse être réalisé par translation perpendiculairement à l'axe du moteur.

3. Procédé selon la revendication précédente dont la translation est effectuée dans un plan horizontal.

4. Procédé selon l'une des revendications 1 à 3, dans lequel lors de l'accostage le berceau est guidé et positionné par rapport à la pièce intermédiaire au moyen de pions (66) de centrage prévus sur l'une des deux interfaces, lesdits pions (66) coopérant avec des orifices de centrage ménagés sur l'autre interface.

5. Procédé selon l'une des revendications 1 à 3 comprenant une étape de fixation du berceau (6) à la pièce intermédiaire (7) une fois le berceau calé en position par rapport à la pièce intermédiaire.

6. Dispositif pour la mise en oeuvre du procédé selon l'une des revendications précédentes, **caractérisé en ce qu'**il comprend un berceau (6) et une pièce intermédiaire (7), le berceau étant agencé pour être rapporté sur le moteur par une structure de liaison (61, 63), et la pièce intermédiaire (7) étant agencée pour être montée sur le pylône (3) indépendamment du berceau (6).

7. Dispositif selon la revendication précédente comprenant un moyen de fixation du berceau à la pièce intermédiaire.

8. Dispositif selon la revendication précédente dont le moyen de fixation comprend des boulons ou des vis (66) liant le berceau à la pièce intermédiaire.

9. Dispositif selon l'une des revendications 6 à 8 comprenant un moyen de calage en position du berceau sur la pièce intermédiaire.

10. Dispositif selon l'une des revendications 6 à 9 dont la pièce intermédiaire comprend des oreilles agencées pour coopérer avec des organes (31) de suspension solidaires du pylône.

11. Dispositif selon la revendication précédente, dans lequel les organes (31) de suspension comprennent des axes horizontaux fixés au pylône.

12. Ensemble d'un aéronef et d'au moins un moteur, ledit aéronef comportant un pylône, **caractérisé en ce que** le moteur est fixé audit pylône par l'intermédiaire d'un dispositif selon l'une des revendications 6 à 11.

## Patentansprüche

1. Verfahren zur Montage eines Motors (1) an einem Luftfahrzeugpylonen (3), der integrale Elemente (31) zur Aufhängung des Motors mit dem Pylonen umfasst, wobei der Motor integral mit einer Aufhängungshalterung (6) verbunden ist, durch die er an dem Pylonen aufgehängt wird, wobei das Verfahren einen Schritt zum Anheben des Motors in einer vertikalen Richtung bis zum Pylonen und dann einen Schritt zum Andocken des Pylonen durch ein Bewegen des Motors in eine andere Richtung umfasst, **dadurch gekennzeichnet, dass** ein Zwischenstück (7) mit einer Schnittstelle, die dazu bestimmt ist, mit einer zusätzlichen Schnittstelle zusammenzuwirken, die an der Halterung (6) vorgesehen ist, vorher an dem Pylonen befestigt wird, indem es an den Aufhängungselementen (31) aufgehängt wird, um die Halterung nach dem Andocken des Pylonen in Bezug auf das Zwischenstück zu verkeilen.

2. Verfahren nach dem vorstehenden Anspruch, bei dem sich der Motor entlang einer Achse erstreckt und die beiden Schnittstellen so angeordnet sind, dass das Andocken durch Verschiebung senkrecht zur Motorachse erfolgen kann.

3. Verfahren nach dem vorstehenden Anspruch, dessen Verschiebung in einer horizontalen Ebene erfolgt.

4. Verfahren nach einem der Ansprüche 1 bis 3, wobei beim Andocken die Halterung mittels an einer der beiden Schnittstellen vorgesehener Zentrierstifte (66) relativ zum Zwischenstück geführt und positioniert wird, wobei die Stifte (66) mit an der anderen Schnittstelle vorgesehenen Zentrierbohrungen zusammenwirken.

5. Verfahren nach einem der Ansprüche 1 bis 3, das einen Schritt zum Befestigen der Halterung (6) an dem Zwischenstück (7) umfasst, sobald die Halterung in Bezug auf das Zwischenstück verkeilt ist.

6. Vorrichtung zur Durchführung des Verfahrens nach einem der vorstehenden Ansprüche, **dadurch gekennzeichnet, dass** sie eine Halterung (6) und ein Zwischenstück (7) umfasst, wobei die Halterung so angeordnet ist, dass sie über eine Verbindungsstruktur (61, 63) am Motor befestigt werden kann und das Zwischenstück (7) so angeordnet ist, dass es unabhängig von der Halterung (6) am Pylonen (3) befestigt werden kann.

7. Vorrichtung nach dem vorstehenden Anspruch, die Mittel zur Befestigung der Halterung am Zwischenstück umfasst.

8. Vorrichtung nach dem vorstehenden Anspruch, deren Befestigungsmittel Bolzen oder Schrauben (66) zur Verbindung der Halterung mit dem Zwischenstück umfassen.

9. Vorrichtung nach einem der Ansprüche 6 bis 8, die Mittel zum Verkeilen der Halterung auf dem Zwischenstück umfasst.

10. Vorrichtung nach einem der Ansprüche 6 bis 9, deren Zwischenstück Ohren umfasst, die zum Zusammenwirken mit den mit dem Pylonen integral verbundenen Aufhängungselementen (31) angeordnet sind.

11. Vorrichtung nach dem vorstehenden Anspruch, wobei die Aufhängungselemente (31) horizontale Achsen umfassen, die am Pylonen befestigt sind.

12. Anordnung eines Luftfahrzeugs und mindestens eines Motors, wobei das Luftfahrzeug einen Pylonen umfasst, **dadurch gekennzeichnet, dass** der Motor mittels einer Vorrichtung nach einem der Ansprüche 6 bis 11 an dem Pylonen befestigt ist.

## Claims

1. Method for mounting an engine (1) on an aircraft strut (3) comprising members (31) for suspending the engine secured to the strut, the engine being secured to a suspension cradle (6) by means of which it is suspended on the strut, the method comprising a step of hauling up the engine in a vertical direction as far as the strut and then a step of docking the strut by a movement of the engine in another direction, **characterised by** the fact that an intermediate piece (7) presenting an interface intended to cooperate with a complementary interface provided on the cradle (6) is fixed in advance to the strut, by attaching it to said suspension members (31), so as to wedge the cradle in position with respect to the intermediate piece at the end of the docking of the strut.

2. Method according to the preceding claim, wherein the engine extends along an axis and the two interfaces are arranged so that the docking can be carried out by translation perpendicular to the axis of the engine.

3. Method according to the preceding claim, wherein the translation is carried out in a horizontal plane.

4. Method according to any of claims 1 to 3, wherein during docking, the cradle is guided and positioned with respect to the intermediate piece by means of centring pins (66) provided on one of the two interfaces, said pins (66) cooperating with centring orifices provided on the other interface.

5. Method according to any of claims 1 to 3, comprising a step of fixing the cradle (6) to the intermediate piece (7) once the cradle is wedged in position with respect to the intermediate piece.

6. Device for implementing the method according to any of the preceding claims, **characterised in that** it comprises a cradle (6) and an intermediate piece (7), the cradle being arranged so as to be attached to the engine by a connecting structure (61, 63), and the intermediate piece (7) being arranged so as to be mounted on the strut (3) independently of the cradle (6).

7. Device according to the preceding claim, comprising a means for fixing the cradle to the intermediate piece.

8. Device according to the preceding claim, wherein the fixing means comprises bolts or screws (66) connecting the cradle to the intermediate piece.

9. Device according to any of claims 6 to 8, comprising a means for wedging the cradle in position on the intermediate piece.

10. Device according to any of claims 6 to 9, wherein the intermediate piece comprises lugs arranged to cooperate with suspension members (31) secured to the strut.

11. Device according to the preceding claim, wherein the suspension members (31) comprise horizontal shafts fixed to the strut.

12. Assembly of an aircraft and at least one engine, said aircraft comprising a strut, **characterised in that** the engine is fixed to said strut by means of a device according to any of claims 6 to 11.
